# FASCICULE DE BREVET EUROPEEN

(11) **EP 2 480 439 B1**
(45) Date de publication et mention de la délivrance du brevet: **16.08.2017**
(21) Numéro de dépôt: 10770851.3
(22) Date de dépôt: 21.09.2010
(51) Int. Cl.: B60W 20/00, B60K 6/48, B60W 10/02, B60W 10/06, B60W 10/08

(54) **PROCEDE D'APPRENTISAGE DU POINT DE LECHAGE D'UN EMBRAYAGE PAR LA COURBE CARACTERISTIQUE DE L'EMBRAYAGE POUR UN VEHICULE HYBRIDE**
VERFAHREN ZUR BESTIMMUNG DES KUPPLUNGBERÜHRUNGSPUNKTES MIT HILFE VON KUPPLUNGKENNLINIEN FÜR EIN HYBRIDFAHRZEUG
METHOD FOR DETERMINING THE TOUCH POINT OF CLUTCH BY THE USE OF CHARACTERISTIC CURVES OF THE CLUTCH FOR A HYBRID VEHICLE

(30) Priorité: 24.09.2009 FR 0956598
(43) Date de publication de la demande: 01.08.2012
(73) Titulaire: Peugeot Citroën Automobiles SA, 78140 Vélizy Villacoublay (FR)
(72) Inventeur: ROCQ, Gaëtan, F-78125 La Boissiere-Ecole (FR); LAUNAY, Cédric, F-78680 Epone (FR); LE NEINDRE, Yvan, F-75017 Paris (FR)
(74) Mandataire: Rosenberg, Muriel Sylvie
(86) Numéro de dépôt international: PCT/FR2010/051962
(87) Numéro de publication internationale: WO 2011/036393

(56) Documents cités:
- EP-A2- 2 014 946
- WO-A2-03/006841
- DE-A1-102007 050 987

## Description

L'invention concerne un procédé d'apprentissage du point de léchage d'un embrayage par la courbe caractéristique de l'embrayage pour un véhicule hybride. L'invention a notamment pour but de permettre la détermination précise de ce point de léchage. L'invention trouve une application particulièrement avantageuse dans le domaine des véhicules hybrides de type parallèle.

Ces véhicules hybrides parallèles sont dotés de deux types d'énergie, thermique et électrique, dont la combinaison permet de garantir leur traction tout en optimisant le rendement énergétique et donc de diminuer la consommation et la pollution. Ces véhicules hybrides parallèles sont capables de rouler indépendamment grâce à l'énergie thermique du moteur à combustion interne ou l'énergie électrique d'une machine électrique.

A cet effet, la chaîne de traction d'un tel véhicule comporte un embrayage installé entre le moteur thermique et la machine électrique, cette machine électrique étant reliée aux roues par l'intermédiaire d'une boîte de vitesses. La machine est en relation avec une batterie à laquelle elle prélève de l'énergie lorsque la machine fonctionne en mode moteur (lors du roulage en ville notamment) et à laquelle elle fournit de l'énergie lorsqu'elle fonctionne en mode générateur (lors des freinages notamment et des roulages sur autoroute).

Le point de léchage de l'embrayage correspond à la position de l'embrayage où les disques commencent à entrer en frottement l'un avec l'autre, de sorte que du couple commence à être transmis par l'embrayage. Le point de léchage permet de recaler la fonction de transfert position/couple et ainsi maîtriser le couple transmis par l'embrayage. L'objectif de la fonction de détermination du point de léchage est donc de gagner en fiabilité et en constance sur les prestations de transmission de couple par l'embrayage (démarrage et changement de rapport).

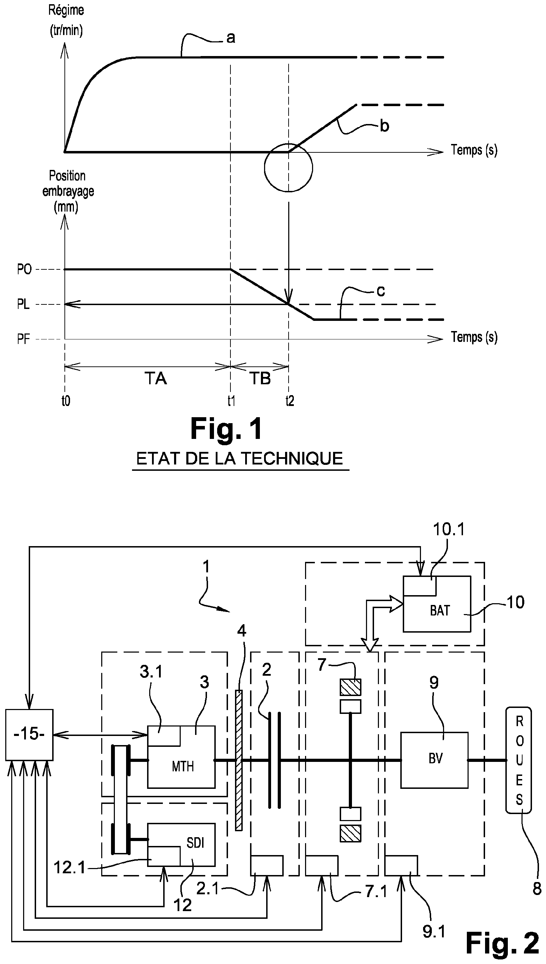

On connaît des boîtes de vitesses manuelles pilotées ou hybrides pour lesquelles l'apprentissage du point de léchage est réalisé moteur thermique tournant, boîte de vitesses au neutre et par détection de la mise en rotation de l'arbre primaire. La Figure 1 montre l'allure de la courbe a de régime du moteur thermique, de la courbe b de régime de la machine électrique ainsi que de la courbe c de la position de l'embrayage en fonction du temps lors de la mise en oeuvre de ce procédé de l'état de la technique. La position PO correspond à une position ouverte de l'embrayage ; tandis que la position PF correspond à une position fermée de l'embrayage.

Ainsi le moteur thermique étant démarré et l'embrayage étant ouvert au maximum, on réalise sur la période TA entre les instants t0 et t1 une régulation de régime du moteur thermique vers une consigne donnée. Une fois le régime du moteur thermique stabilisé à l'instant t1, on réalise sur la période TB entre les instants t1 et t2 une fermeture lente de l'embrayage afin de transmettre un couple faible à la machine électrique et permettre ainsi sa montée en régime. Dès que l'on détecte à l'instant t2 un delta de régime de la machine électrique supérieur à un seuil calibrable, on mémorise la position de l'actionneur d'embrayage (par exemple au niveau de la butée concentrique) pour en déduire le point de léchage PL de l'embrayage dans les conditions d'usure et de température d'utilisation du véhicule.

Cette technique présente l'avantage d'être simple mais pose un problème de précision de l'apprentissage dans le cas des véhicules hybrides. En effet, sur l'architecture hybride visée, la machine électrique étant mécaniquement liée à l'arbre primaire, elle apporte une inertie importante ainsi que des frottements non linéaires. Dès lors, il est très difficile de mettre en rotation l'arbre primaire et donc de détecter un couple faible transmis par l'embrayage. De plus, la non linéarité des frottements de la machine électrique à régime faible entraîne de la dispersion sur la mesure du point de léchage.

On connaît également le document FR-2823545 qui enseigne un processus d'apprentissage du point de léchage d'un véhicule à l'arrêt, moteur thermique tournant, en fermant progressivement l'embrayage jusqu'a détecter un point de réaction du moteur ou de la transmission. La position de la butée d'embrayage correspondant à ce point est mise en mémoire comme une nouvelle référence de gestion de l'embrayage. Le but de ce procédé est de réaliser un apprentissage du point de léchage par observation en temps réel (en continu) de l'évolution d'un signal de réaction et de la comparaison avec un seuil de détection. Toutefois, il n'y a aucun post traitement afin de déterminer le point de léchage par extrapolation de plusieurs points de mesure, mais un seul point de mesure. En ne faisant qu'un seul point de mesure, la précision de l'apprentissage du point de léchage est donc réduite. A l'inverse dans l'invention, on détermine plusieurs points de mesure à différents endroits de la caractéristique du couple transmissible par l'embrayage afin de déterminer par extrapolation et donc avec une plus grande précision la position du point de léchage.

Le document EP-0883509 décrit un apprentissage du point de léchage par observation en continu de l'évolution du régime moteur lors d'une fermeture embrayage progressive. Une fois un critère d'évolution de régime moteur détecté, une unique caractéristique connue du couple transmissible par l'embrayage est utilisée pour déterminer le point de léchage. Contrairement à l'invention, ce procédé est appliqué uniquement lors d'un changement de rapport descendant lorsque le nouveau rapport est engagé et que l'embrayage se referme progressivement. Contrairement à l'invention, ce procédé ne permet pas à chaque nouvel apprentissage la reconstitution d'une courbe caractéristique de l'embrayage remise à jour à partir de plusieurs points de mesure.

Le document FR-2887606 présente un procédé d'adaptation des lois de comportement de l'embrayage d'un véhicule hybride en fonction de l'utilisation de l'embrayage. Le procédé réalise une auto-adaptation à partir d'interpolation des lois de comportement. Toutefois, ce procédé n'a pas pour but de réaliser un apprentissage du point de léchage mais de réaliser une mise à jour en temps réel de la caractéristique de couple de l'embrayage par interpolation entre deux lois de comportement différentes et par auto-adaptation. En aucun cas, il ne s'agit d'apprendre la position du point de léchage comme c'est le cas dans l'invention.

Le document FR-2859258 décrit un procédé de sélection d'une courbe de comportement d'actionneur d'embrayage parmi celles mémorisées au préalable, en tant que loi de commande de fermeture/ouverture de l'embrayage. La sélection repose sur des mesures physiques déterminant le point de léchage réel et la position d'actionneur dans certaines conditions. Toutefois, la problématique de ce procédé est complètement différente de celle de l'invention. En effet, dans le document FR-2859258, le but est de déterminer avec précision la caractéristique de couple de l'embrayage la plus réaliste possible à un instant donné. A cette fin, le point de léchage ainsi que d'autres points de mesure de couple transmissible par l'embrayage sont utilisés comme données entrantes afin de déterminer la bonne loi (position embrayage/couple transmissible) à utiliser. En revanche, dans l'invention c'est l'inverse qui est effectué, c'est-à-dire qu'on mesure une caractéristique de couple embrayage/position de l'embrayage afin de déterminer par extrapolation le point de léchage à prendre en compte.

Le document DE-A-10 2007 050987 décrit un procédé de détermination d'un point de léchage d'un embrayage relié d'une part à un moteur thermique et d'autre part à une machine électrique, cette machine électrique étant reliée aux roues du véhicule.

L'invention permet de résoudre les inconvénients des procédés existants.

A cet effet, on détermine le point de léchage en calculant et mémorisant pour différentes positions de l'embrayage le couple transmis entre le moteur thermique et la machine électrique. A partir de ces couples mémorisés (couple transmis par l'embrayage, position de l'embrayage), on détermine, de préférence en temps réel, par extrapolation une valeur de position d'embrayage correspondant au point de léchage.

L'invention permet un apprentissage du point de léchage plus précis que les techniques connues grâce à l'utilisation de la machine électrique dans une zone de comportement linéaire où les pertes de la machine électrique et de la boîte de vitesses sont linéaires.

L'invention permet en outre de réduire le temps de glissement de l'embrayage et ainsi de réduire les échauffements qui pourraient venir décaler artificiellement la caractéristique de l'embrayage.

L'invention concerne donc un procédé de détermination d'un point de léchage d'un embrayage relié d'une part à un moteur thermique et d'autre part à une machine électrique, cette machine électrique étant reliée aux roues du véhicule, caractérisé en ce qu'il comporte les étapes suivantes :
- on détermine pour différentes positions d'embrayage le couple transmis entre le moteur thermique et la machine électrique,
- on effectue une régression à partir des couples (couple transmis, position d'embrayage) pour déterminer une courbe de régression caractéristique de l'embrayage, et
- on détermine par extrapolation de la courbe de régression une valeur de position d'embrayage correspondant au point de léchage de l'embrayage.

Selon une mise en oeuvre, pour déterminer le couple transmis pour différentes positions d'embrayage, on met en oeuvre les étapes suivantes :
i - on démarre le moteur thermique,
ii - on réalise une régulation de couple de la machine électrique à couple nul,
ii - on ferme progressivement l'embrayage au maximum et on pilote en régime le moteur thermique et la machine électrique vers une même valeur de consigne,
iii - une fois que les régimes du moteur thermique et de la machine électrique sont stabilisés et égaux à la valeur de consigne et que l'embrayage est totalement fermé, on commande la machine électrique avec une consigne de couple négative, puis
iv - on réalise une ouverture lente de l'embrayage jusqu'à atteindre le glissement,
v - dès que l'on détecte un delta de régime entre la machine électrique et le moteur thermique supérieur à un seuil calibrable, on mémorise la position d'embrayage pour ce couple de consigne de la machine électrique correspondant au couple transmissible par l'embrayage, et on referme aussitôt l'embrayage au maximum, et
vi - on réitère alors plusieurs fois les étapes (iii) à (v) pour d'autres consignes de couple de la machine électrique.

Selon une mise en oeuvre, on mesure la position d'embrayage au niveau de la butée concentrique de l'embrayage.

Selon une mise en oeuvre, le seuil calibrable est de l'ordre de 50trs/min.

Selon une mise en oeuvre, pour obtenir la courbe de régression, on effectue une régression quadratique en utilisant la méthode des moindres carrés sur les points obtenus expérimentalement.

Selon une mise en oeuvre, la courbe de régression est obtenue à l'aide d'un faisceau de courbes caractéristiques de l'embrayage de référence.

Selon une mise en oeuvre, les courbes caractéristiques de l'embrayage de référence ont un point de référence fixe lorsque l'embrayage est totalement fermé.

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 (déjà décrite) : des courbes montrant l'évolution en fonction du temps du régime du moteur thermique et de la machine électrique, du couple de la machine électrique et de la position de l'embrayage lors de la mise en oeuvre d'un procédé de détermination du point de léchage selon l'état de la technique ;
Figure 2 : une représentation schématique d'une chaîne de traction d'un véhicule hybride de type parallèle selon l'invention mettant en oeuvre le procédé de détermination du point de léchage selon l'invention ;
Figure 3 : des courbes montrant l'évolution en fonction du temps du régime du moteur thermique et de la machine électrique, du couple de la machine électrique et de la position de l'embrayage lors de la mise en oeuvre du procédé selon l'invention pour l'acquisition des couples (couple transmis par l'embrayage, position de l'embrayage) ;
Figure 4 : une courbe caractéristique de l'embrayage obtenue à partir des points correspondant aux couples (couple transmis, position de l'embrayage) permettant de déterminer par extrapolation le point de léchage de l'embrayage.

Les éléments identiques conservent la même référence d'une figure à l'autre.

La Figure 2 montre une représentation schématique d'une chaîne de traction 1 d'un véhicule hybride de type parallèle mettant en oeuvre le procédé selon l'invention. Cette chaîne de traction 1 comporte un système 2 de couplage/découplage formé par un embrayage sec, humide ou autre relié d'une part à un moteur 3 à combustion interne, essence, diesel ou autre muni de son volant d'inertie 4 et d'autre part à une machine 7 électrique.

Cette machine 7 est implantée sur l'arbre d'entrée d'un système 9 de démultiplication à N rapports discrets formé par une boîte de vitesses manuelle pilotée, automatique, DCT, ou autre, ce système 9 de démultiplication ayant son arbre de sortie relié aux roues 8 du véhicule.

En outre, une batterie 10 de puissance est connectée à la machine 7 électrique. Lorsque la vitesse du véhicule est inférieure à une vitesse seuil (de l'ordre de 50km) au cours des roulages en ville notamment, la machine 7 fonctionne en mode moteur et prélève de l'énergie à la batterie 10 ; tandis que lorsque la vitesse du véhicule est supérieure à la vitesse seuil pour des roulages sur autoroute, ou lors des phases de récupération d'énergie lors des freinages notamment, la machine 7 fonctionne en mode générateur et fournit de l'énergie à la batterie 10.

Par ailleurs, un système 12 de démarrage indépendant du moteur 3 thermique formé par un démarreur piloté, un système de « Stop & Start » ou tout autre type de système adapté est en relation avec le moteur 3 thermique pour faciliter son démarrage.

Chaque organe 2, 3, 7, 9, 10, 12 est piloté par un calculateur de contrôle rapproché 2.1, 3.1, 7.1, 9.1, 10.1, 12.1 qui est lui même commandé par un calculateur 15 unique dit de supervision qui prend les décisions et synchronise les actions pour répondre à la volonté du conducteur. Ce superviseur 15, en fonction des situations de vie et l'état du véhicule, pilote la chaîne 1 de traction, décide du mode de roulage, coordonne toutes les phases transitoires et choisit les points de fonctionnement afin d'optimiser la consommation de carburant et la dépollution.

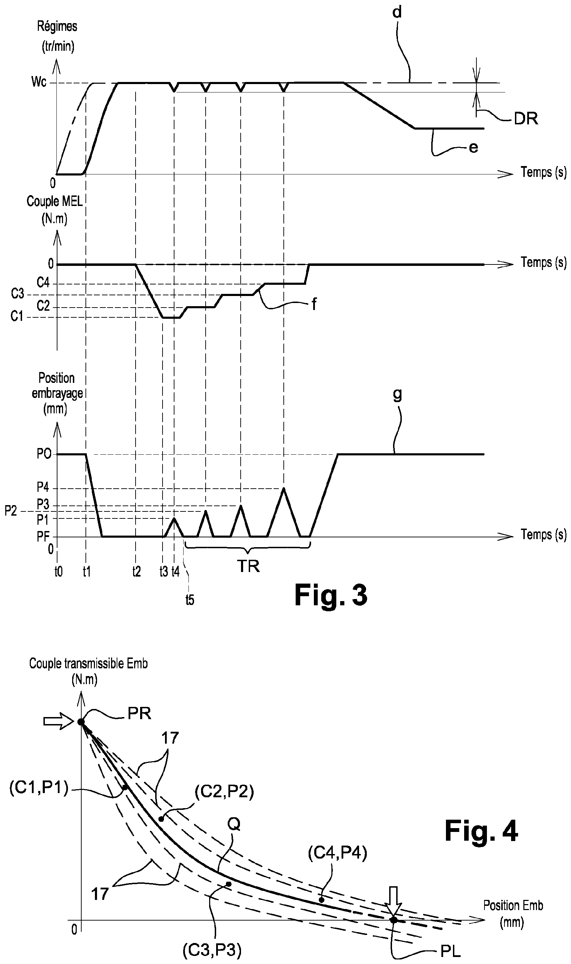

La Figure 3 montre l'allure de la courbe d de régime du moteur 3 thermique (en trait mixte), de la courbe e de régime de la machine 7 électrique (en trait plein), de la courbe f de couple de la machine 7 électrique ainsi que de la courbe g de la position de l'embrayage 2 en fonction du temps lors de la mise en oeuvre de ce procédé. On note que la position PO correspond à une position ouverte de l'embrayage 2 ; tandis que la position PF correspond à une position fermée de l'embrayage 2.

Entre les instants t0 et t1, le moteur 3 thermique est démarré et piloté en régime. L'embrayage 2 étant ouvert de préférence au maximum (position PO), le calculateur 15 commande une régulation de couple de la machine 7 électrique à couple nul.

Entre les instants t1 et t2, le calculateur 15 commande la fermeture progressive de l'embrayage 2 au maximum jusqu'à la position PF et pilote en régime le moteur 3 thermique et la machine 7 électrique vers une même valeur de consigne Wc.

A l'instant t2, une fois que les régimes du moteur 3 thermique et de la machine 7 sont stabilisés et égaux à la valeur de consigne Wc, et que l'embrayage 2 est totalement fermé, le calculateur 15 commande la machine 7 électrique avec une consigne C1 de couple négative.

A l'instant t3, une fois la valeur de consigne C1 de couple atteinte, le superviseur 15 commande une ouverture lente de l'embrayage 2 jusqu'à atteindre le glissement.

Dès que, à l'instant t4, on détecte un delta de régime entre la machine 7 électrique et le moteur 3 thermique supérieur à un seuil calibrable DR, on mémorise la position P1 de l'actionneur d'embrayage 2, par exemple au niveau de la butée concentrique, pour ce couple de consigne C1 correspondant au couple transmissible par l'embrayage 2. Le calculateur 15 commande aussitôt, juste après t4, la fermeture de l'embrayage 2, cette fermeture étant entièrement réalisée à l'instant t5. Dans un exemple, le seuil calibrable DR est de l'ordre de 50 trs/min.

Sur la période TR, on réitère alors plusieurs fois les opérations d'ouverture et de fermeture de l'embrayage 2 pour d'autres consignes de couple Ci, afin d'obtenir plusieurs couples (couple Ci transmissible par l'embrayage, position d'embrayage Pi correspondante). Ainsi pour les consignes de couple C2, C3, C4, on détermine la position d'embrayage P2, P3 et P4 correspondantes.

On positionne ensuite les points correspondants aux couples Ci, Pi sur un graphique montré sur la Figure 4. En opérant une régression, on obtient une courbe Q passant au plus près des points (Ci, Pi) observés correspondant à la caractéristique du couple transmissible de l'embrayage 2 en fonction de la position de l'actionneur de cet embrayage 2. On extrapole ensuite cette courbe Q de régression jusqu'au couple transmissible nul pour obtenir le point de léchage PL. Bien entendu, il est possible d'effectuer la régression avec plus ou moins de 4 points (Ci, Pi).

De préférence, la régression est obtenue à l'aide d'un faisceau de courbes caractéristiques 17 de l'embrayage de référence ayant de préférence toutes un point PR de référence fixe lorsque l'embrayage 2 est totalement fermé. Cette régression quadratique est effectuée de préférence en utilisant la méthode des moindres carrés sur les points (Ci, Pi) obtenus expérimentalement.

## Revendications

1. Procédé de détermination d'un point de léchage d'un embrayage (2) relié d'une part à un moteur (3) thermique et d'autre part à une machine (7) électrique, cette machine (7) électrique étant reliée aux roues (8) du véhicule, **caractérisé en ce qu'**il comporte les étapes suivantes :
- on détermine pour différentes positions d'embrayage (Pi) le couple (Ci) transmis entre le moteur (3) thermique et la machine (7) électrique,
- on effectue une régression à partir des couples Ci et des positions d'embrayage Pi pour déterminer une courbe (Q) de régression caractéristique de l'embrayage (2), et
- on détermine par extrapolation de la courbe (Q) de régression une valeur de position d'embrayage (PL) correspondant au point de léchage de l'embrayage (2).

2. Procédé selon la revendication 1, **caractérisé en ce que** pour déterminer le couple transmis (Ci) pour différentes positions d'embrayage (Pi), on met en oeuvre les étapes suivantes :
i - on démarre le moteur (3) thermique,
ii - on réalise une régulation de couple de la machine (7) électrique à couple nul,
ii - on ferme progressivement l'embrayage (2) au maximum et on pilote en régime le moteur (3) thermique et la machine (7) électrique vers une même valeur de consigne (Wc),
iii - une fois que les régimes du moteur (3) thermique et de la machine (7) électrique sont stabilisés et égaux à la valeur de consigne (Wc) et que l'embrayage (2) est totalement fermé, on commande la machine (7) électrique avec une consigne (Ci) de couple négative, puis
iv - on réalise une ouverture lente de l'embrayage (2) jusqu'à atteindre le glissement,
v - dès que l'on détecte un delta de régime entre la machine (7) électrique et le moteur (3) thermique supérieur à un seuil calibrable (DR), on mémorise la position d'embrayage (Pi) pour ce couple (Ci) de consigne de la machine électrique correspondant au couple transmissible par l'embrayage (2), et on referme aussitôt l'embrayage (2) au maximum, et
vi - on réitère alors plusieurs fois les étapes (iii) à (v) pour d'autres consignes de couple (Ci) de la machine (7) électrique.

3. Procédé selon la revendication 2, **caractérisé en ce que** on mesure la position (Pi) d'embrayage au niveau de la butée concentrique de l'embrayage (2).

4. Procédé selon la revendication 2 ou 3, **caractérisé en ce que** le seuil calibrable (DR) est de l'ordre de 50 trs/min.

5. Procédé selon l'une des revendications 1 à 4, caractérisé en ce pour obtenir la courbe (Q) de régression, on effectue une régression quadratique en utilisant la méthode des moindres carrés sur les points (Ci, Pi) obtenus expérimentalement.

6. Procédé selon l'une des revendications 1 à 5, **caractérisé en ce que** la courbe (Q) de régression est obtenue à l'aide d'un faisceau de courbes caractéristiques (17) de l'embrayage de référence.

7. Procédé selon la revendication 6, **caractérisé en ce que** les courbes caractéristiques de l'embrayage de référence ont un point de référence (PR) fixe lorsque l'embrayage (2) est totalement fermé.

## Patentansprüche

1. Verfahren zum Bestimmen eines Kupplungsberührungspunkts einer Kupplung (2), die einerseits mit einer Wärmekraftmaschine (3) und andererseits mit einer Elektromaschine (7) verbunden ist, wobei diese Elektromaschine (7) mit Rädern (8) des Fahrzeugs verbunden ist, **dadurch gekennzeichnet, dass** es die folgenden Schritte umfasst:
- Bestimmen für unterschiedliche Kupplungspositionen (Pi) des Drehmoments (Ci), das zwischen der Brennkraftmaschine (3) und der Elektromaschine (7) übertragen wird,
- Ausführen einer Regression ausgehend von den Drehmomenten Ci und den Kupplungspositionen Pi, um eine charakteristische Regressionskurve (Q) der Kupplung (2) zu bestimmen, und
- Bestimmen durch Extrapolation der Regressionskurve (Q) eines Kupplungspositionswerts (PL), der dem Kupplungsberührungspunkt (2) entspricht.

2. Verfahren nach Anspruch 1, **dadurch gekennzeichnet, dass** man zum Bestimmen des Drehmoments (Ci), das für unterschiedliche Kupplungspositionen (Pi) übertragen wird, die folgenden Schritte umsetzt:
i - man startet die Wärmekraftmaschine (3),
ii - man führt eine Drehmomentregulierung der Elektromaschine (7) auf null Drehmoment aus,
ii - man schließt allmählich die Kupplung (2) maximal, und man steuerte Wärmekraftmaschine (3) und Elektromaschine (7) hinsichtlich ihres Drehmoments zu demselben Sollwert (Wc),
iii - sobald die Drehzahlen der Wärmekraftmaschine (3) und der Elektromaschine (7) stabilisiert und gleich dem Sollwert (Wc) sind und die Kupplung (2) vollständig geschlossen ist, steuert man die Elektromaschine (7) mit einem negativen Solldrehmoment (Ci), dann
iv - führt man ein langsames Öffnen der Kupplung (2) aus, bis man das Schlupfen erreicht,
v - sobald man ein Drehmoment-Delta zwischen der Elektromaschine (7) und dem Wärmekraftmotor (3), das größer ist als ein kalibrierbarer Schwellenwert (DR), erfasst, speichert man die Kupplungsposition (Pi) für dieses Solldrehmoment (Ci) der Elektromaschine, das dem Drehmoment entspricht, das von der Kupplung (2) übertragbar ist, und man schließt alsbald die Kupplung (2) maximal, und
vi - man wiederholt die Schritte (iii) bis (v) mehrmals für andere Drehmomentsollwerte (Ci) der Elektromaschine (7).

3. Verfahren nach Anspruch 2, **dadurch gekennzeichnet, dass** man die Kupplungsposition (Pi) im Bereich des konzentrischen Anschlags der Kupplung (2) misst.

4. Verfahren nach Anspruch 2 oder 3, **dadurch gekennzeichnet, dass** der kalibrierbare Schwellenwert (DR) in der Größenordnung von 50 U/Min. liegt.

5. Verfahren nach Anspruch 1 bis 4, **dadurch gekennzeichnet, dass** man zum Erhalten der Regressionskurve (Q) eine quadratische Regression unter Verwenden des Verfahrens der kleinsten Quadrate auf den Punkten (Ci, Pi), die experimentell erhalten wurden, ausführt.

6. Verfahren nach einem der Ansprüche 1 bis 5, **dadurch gekennzeichnet, dass** man die Regressionskurve (Q) mit Hilfe eines Bündels von Kennlinien (17) der Referenzkupplung erhält.

7. Verfahren nach Anspruch 6, **dadurch gekennzeichnet, dass** die Kennlinien der Referenzkupplung einen stationären Referenzpunkt (PR) haben, wenn die Kupplung (2) vollständig geschlossen ist.

## Claims

1. A method for determining a touch point of a clutch (2) connected on the one hand to a heat engine (3) and on the other hand to an electric machine (7), this electric machine (7) being connected to the wheels (8) of the vehicle, **characterized in that** it comprises the following steps:
- for different clutch positions (Pi) the torque (Ci) transmitted between the heat engine (3) and the electric machine (7) is determined,
- a regression is carried out from the torques Ci and the clutch positions Pi to determine a characteristic regression curve (Q) of the clutch (2), and
- by extrapolation of the regression curve (Q) a clutch position value (PL) is determined, corresponding to the touch point of the clutch (2) .

2. The method according to Claim 1, **characterized in that** to determine the transmitted torque (Ci) for different clutch positions (Pi), the following steps are implemented:
i - the heat engine (3) is started up,
ii - a torque regulation of the electric machine (7) is carried out at zero torque,
ii - the clutch (2) is closed progressively to the maximum and the heat engine (3) and the electric machine (7) are driven with regard to speed towards the same setpoint value (Wc),
iii - once the speeds of the heat engine (3) and of the electric machine (7) are stabilized and equal to the setpoint (Wc) and the clutch (2) is totally closed, the electric machine (7) is operated with a negative torque setpoint (Ci), then
iv - a slow opening of the clutch (2) is carried out until slip is reached,
v - as soon as a speed delta is detected between the electric machine (7) and the heat engine (3) greater than a calibratable threshold (DR), the clutch position (Pi) is stored for the setpoint torque (Ci) of the electric machine corresponding to the transmissible torque by the clutch (2), and the clutch (2) is closed again immediately to the maximum, and
vi - steps (iii) to (v) are then repeated several times for other torque setpoints (Ci) of the electric machine (7).

3. The method according to Claim 2, **characterized in that** the clutch position (Pi) is measured at the level of the concentric stop of the clutch (2).

4. The method according to Claim 2 or 3, **characterized in that** the calibratable threshold (DR) is in the order of 50 rpm.

5. The method according to one of Claims 1 to 4, **characterized in that** to obtain the regression curve (Q) a quadratic regression is carried out using the method of least squares on the points (Ci, Pi) obtained experimentally.

6. The method according to one of Claims 1 to 5, **characterized in that** the regression curve (Q) is obtained by means of a beam of characteristic curves (17) of the reference clutch.

7. The method according to Claim 6, **characterized in that** the characteristic curves of the reference clutch have a fixed reference point (PR) when the clutch (2) is totally closed.
